# EUROPÄISCHE PATENTSCHRIFT

(11) **EP 1 161 720 B1**
(45) Veröffentlichungstag und Bekanntmachung des Hinweises auf die Patenterteilung: **18.09.2002**
(21) Anmeldenummer: 00916778.4
(22) Anmeldetag: 01.03.2000
(51) Int. Cl.: G06F 3/00

(54) **VERFAHREN UND ANORDNUNG ZUR INTERAKTION MIT EINEM BENUTZER**
METHOD AND DEVICE FOR EFFECTING AN INTERACTION WITH A USER
PROCEDE ET DISPOSITIF POUR CREER UNE INTERACTION AVEC UN UTILISATEUR

(30) Priorität: 17.03.1999 DE 19911984
(43) Veröffentlichungstag der Anmeldung: 12.12.2001
(73) Patentinhaber: SIEMENS AKTIENGESELLSCHAFT, 80333 München (DE)
(72) Erfinder: MAGGIONI, Christoph, D-81541 München (DE)
(86) Internationale Anmeldenummer: DE0000598
(87) Internationale Veröffentlichungsnummer: WO00055712

(56) Entgegenhaltungen:
- WO-A-95/17710
- US-A- 5 528 263
- "Industrial Presentation" IT-HAUSSMESSE, BERLIN, [Online] 15. Februar 1999 (1999-02-15), XP002138933 Retrieved from the Internet: <URL:http://www.atd.siemens.de/it-dl/CeBIT 99/messe16.htm> [retrieved on 2000-05-25]

## Beschreibung

Die Erfindung betrifft ein Verfahren und eine Anordnung zur Interaktion mit einem Benutzer.

Bei einem handelsüblichen Touchscreen verfährt ein Benutzer mit dem Finger auf einer Fläche und bewegt analog dazu einen Mauszeiger auf einem Bildschirm. Befindet sich der Mauszeiger auf der gewünschten Position kann durch kurzes Tippen auf den Touchscreen die mit der Position verbundene Aktion ausgelöst werden.

Ferner ist aus [1] ein sogenannter Virtual Touchscreen bekannt. Mit der Aufnahme einer Interaktionskomponente, z.B. einer Hand oder einem Zeigestab, zusammen mit einer Interaktionsfläche auf die vorzugsweise eine graphische Bedienoberfläche projiziert wird, ist es möglich, direkt auf der graphischen Bedienoberfläche zu interagieren, die oben beschriebene Aufteilung zwischen Darstellung der Bedienoberfläche und Touchscreen entfällt.

Nun werden über solch einen Virtual Touchscreen bevorzugt virtuelle Schalter, Schieberegler oder Taster über ein virtuelles Drücken mit dem Finger bedient. Dabei drückt der Finger nicht wirklich auf eine Taste, eine entsprechende Rückmeldung bei dem Benutzer findet somit nicht statt.

Ein Flachlautsprecher (Flächenlautsprecher) ist aus [2] bekannt.

Aus WO 95/17710 ist ein Interaktionsbauelement bekannt, das von einem Finger bedient werden kann. Zur Rückmeldung an den Finger ist an das Interaktionsbauelement ein Lautsprecher angeschlossen, der es in Abhängigkeit von der Position des Fingers gemäß dazu abgespeicherter Audiodaten in Schwingungen versetzt.

Die **Aufgabe** der Erfindung besteht darin, eine Interaktion zu ermöglichen, die dem Benutzer insbesondere eine haptische Rückmeldung auf seine Interaktion liefert, wobei sich das dazu notwendige Verfahren bzw. die Anordnung durch einen einfachen und platzsparenden Aufbau auszeichnen.

Diese Aufgabe wird gemäß den Merkmalen der unabhängigen Patentansprüche gelöst. Weiterbildungen der Erfindung ergeben sich auch aus den abhängigen Ansprüchen.

Zur Lösung der Aufgabe wird ein Verfahren zur Interaktion mit einem Benutzer angegeben, bei dem bei Vorliegen eines Ereignisses auf einer Interaktiqnsfläche die Interaktionsfläche oder ein Teil der Interaktionsfläche mittels eines Flachlautsprechers in Schwingung versetzt wird, wobei die Interaktionsfläche oder der Teil der Interaktionsfläche als der Flachlautsprecher ausgeführt ist.

Insbesondere wird dabei die Interaktionsfläche aktiv in Schwingung versetzt um dem Benutzer eine Rückmeldung zu dem Ereignis zu geben.

Damit wird vorteilhaft für den Benutzer ein von ihm verursachtes Ereignis "erfühlbar". Ein solches Ereignis kann z.B. sein:
a) ein Berühren der Interaktionsfläche:
   Bei Berühren der Interaktionsfläche wird diese oder zumindest ein Teil derselben in Schwingung versetzt, so daß der Benutzer Rückmeldung über die Berührung erhält ("erfühlt").
b) ein Bewegen einer Interaktionskomponente, z.B. einer Hand oder eines Fingers des Benutzers auf der Interaktionsfläche:
   Dieses Ereignis "Bewegung" kann dem Benutzer ebenfalls über die in Schwingung versetzte Interaktionsfläche rückgemeldet werden.
c) ein Verweilen der Interaktionskomponente für eine vorgegebene Zeitdauer auf der Interaktionsfläche: Durch das Verweilen für eine vorgegebene Zeitdauer kann die Auslösung einer bestimmten, z.B. mit der Position des Verweilens assoziierten Funktion auf der Interaktionsfläche als einer graphischen
   Bedienoberfläche ausgelöst werden. Dieser Mechanismus entspricht z.B. dem Doppelklick mit einer (Computer-) Maus als Eingabemedium für eine graphische Bedienoberfläche.

Vorzugsweise kann die Schwingung unterhalb der hörbaren Frequenzen erfolgen, so daß eine haptische Wahrnehmung neben einer möglicherweise zusätzlich vorhandenen akustischen Wahrnehmung erfolgt.

Auch ist es eine Weiterbildung, daß auf die Interaktionsfläche eine graphische Bedienoberfläche projiziert wird. Eine Kamera nimmt die Bedienoberfläche auf. Begibt sich die Interaktionskomponente, z.B. Hand oder Finger des Benutzers, über die Bedienoberfläche, so wird die Interaktionskomponente aufgenommen und mittels eines Rechners abhängig von ihrer Position eine auf der Bedienoberfläche dargestellte Funktion ausgelöst. Mit anderen Worten nimmt die Interaktionskomponente auf der Bedienoberfläche die Funktionalität eines Eingabezeigers, insbesondere eines (Computer-)Mauszeigers wahr. Ein (Auslöse-)Ereignis (im analogen Beispiel mit der Computermaus: Klick oder Doppelklick) kann insbesondere ein Verweilen der Interaktionskomponente für eine vorgegebene Zeitdauer an der mit der Funktion assoziierten Position sein.

Um eine verbesserte Erkennungsleistung der Interaktionskomponente auf der Interaktionsfläche (im Beispiel: auf der Bedienoberfläche) zu ermöglichen, kann die Interaktionsfläche mit Infrarotlicht beleuchtet werden. Die aufnehmende Kamera kann derart eingerichtet sein, daß sie für den Spektralbereich des Infrarotlichts (besonders) empfindlich ist. Dadurch wird eine erhöhte Unempfindlichkeit gegenüber Fremdlichteinfluß erzielt.

Die Art wie die Interaktionsfläche (oder ein Teil derselben) in Schwingung versetzt wird, kann unterschiedlich ausgestaltet sein: So ist es bspw. möglich mit unterschiedlichen Schwingungen bestimmte Ereignisse zu verknüpfen. Beispielsweise kann ein Bewegen der Interaktionskomponente auf der Interaktionsfläche mit anderen Schwingungen quittiert werden als eine bloße Berührung der Interaktionsfläche. Ist auf der Interaktionsfläche eine graphische Bedienoberfläche mit zahlreichen Schaltflächen, wobei eine Schaltfläche mit einer vorgegebenen Funktion assoziiert ist, dargestellt, so kann das Auslösen der Funktion ebenfalls mit einem bestimmten Schwingungsmuster an den Benutzer haptisch rückgemeldet werden. Damit ist vorteilhaft z.B. eine Bedienung virtueller Schalter möglich, deren Auslösung ohne haptische Rückmeldung visuell kontrolliert werden muß. Mit dem vorgestellten Verfahren ist es nun möglich, ohne visuelle Kontrolle bestimmte Funktionen auszulösen.

Auch wird zur Lösung der Aufgabe eine Anordnung zur Interaktion mit einem Benutzer angegeben, bei der eine Prozessoreinheit vorgesehen ist, die derart eingerichtet ist, daß bei Vorliegen eines Ereignisses auf einer Interaktionsfläche die Interaktionsfläche oder ein Teil der Interaktionsfläche mittels eines Flachlautsprechers in Schwingung versetzt wird, wobei die Interaktionsfläche oder der Teil der Interaktionsfläche als der Flachlautsprecher ausgeführt ist.

Diese Anordnung ist insbesondere geeignet zur Durchführung des erfindungsgemäßen Verfahrens oder einer seiner vorstehend erläuterten Weiterbildungen.

Ausführungsbeispiele der Erfindung werden nachfolgend anhand der Zeichnung dargestellt und erläutert.

Es zeigen
- Fig. 1: einen Virtual Touchscreen mit einem Flachlautsprecher;
- Fig.2: eine Prozessoreinheit.

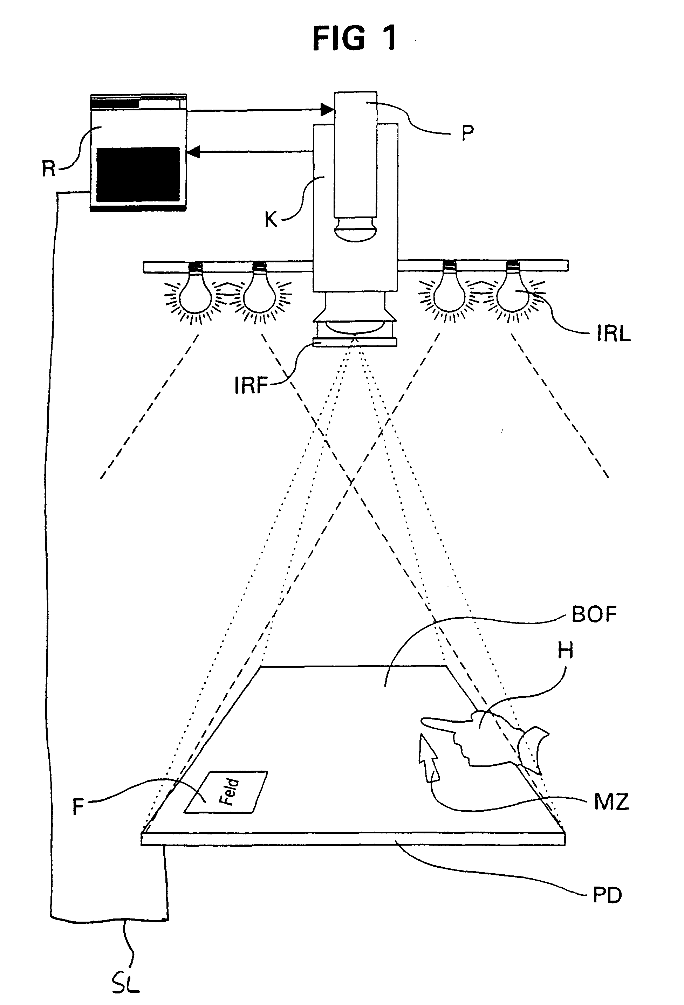

In **Fig.1** wird eine Anordnung eines Virtual-Touch-Screens beschrieben. Eine Interaktionsfläche (graphische Bedienoberfläche BOF) wird auf einen vorgebbaren Bereich, hier ein Projektionsdisplay PD, abgebildet. Das Projektionsdisplay PD ersetzt dabei einen konventionellen Bildschirm. Die Eingabe erfolgt durch direktes Zeigen mit der Interaktionskomponente, der Hand H auf die Bedienoberfläche BOF. Dadurch können beispielsweise Tastatur, Maus, Touchscreen oder Digitalisiertablett konventioneller Systeme ersetzt werden. Die Erkennung der Gesten und die Positionierung innerhalb der Bedienoberfläche BOF werden durch ein videobasiertes System (Gestik-Computer), das in der Lage ist, Projektion und Form z.B. der menschlichen Hand in Echtzeit zu erkennen und zu verfolgen, realisiert. Ferner wird in Fig.1 das Projektionsdisplay PD mit Infrarotlicht beleuchtet. Die Infrarotlichtquelle IRL kann vorteilhaft mittels Infrarotleuchtdioden ausgeführt sein. Eine Kamera K, die vorzugsweise mit einem speziellen Infrarotfilter IRF, das im infraroten Spektralbereich empfindlich ist, ausgestaltet ist, nimmt das Projektionsdisplay PD auf. Mit einem Projektor P, der von einem Rechner R gesteuert wird, wird die Bedienoberfläche BOF auf das Projektionsdisplay PD abgebildet. Die Bedienoberfläche BOF kann dabei ausgestaltet sein als ein Menüsystem auf einem Monitor des Rechners R. Ein Mauszeiger MZ wird durch die Hand H des Benutzers bewegt. Anstelle der Hand H kann als Interaktionskomponente auch ein Zeigestab verwendet werden.

Soll auf der Bedienoberfläche BOF die mit der Betätigung des Feldes F assoziierte Funktion aufgerufen werden, so wird die Hand H zu dem Feld F bewegt, der Mauszeiger MZ folgt dabei der Hand H. Verharrt die Hand H für eine vorgebbare Zeitdauer über dem Feld F, so wird die mit dem Feld F assoziierte Funktion auf dem Rechner R ausgelöst. Dabei wird die Bedienoberfläche BOF, die vorzugsweise als Flachlautsprecher ausgeführt ist, durch den Rechner R in Schwingung versetzt und dem Benutzer eine haptische Rückmeldung zu einer Eingabe (hier: dem Aufruf der mit dem Feld F assoziierten Funktion) geliefert. Der Rechner steuert dabei den Flachlautsprecher an und erzeugt ggf. funktionsspezifische Schwingungen als haptische Rückmeldungen an den Benutzer (angedeutet durch die Steuerleitung SL). Neben dem Ereignis des Auslösens der mit dem Feld F assoziierten Funktion ist es auch möglich, die Bewegung der Hand H über der Bedienoberfläche BOF mit haptischem Feedback anzureichern, wobei vorzugsweise dieses Feedback von einer anderen Art als das Feedback des Auslösens des virtuellen Tasters F ist.

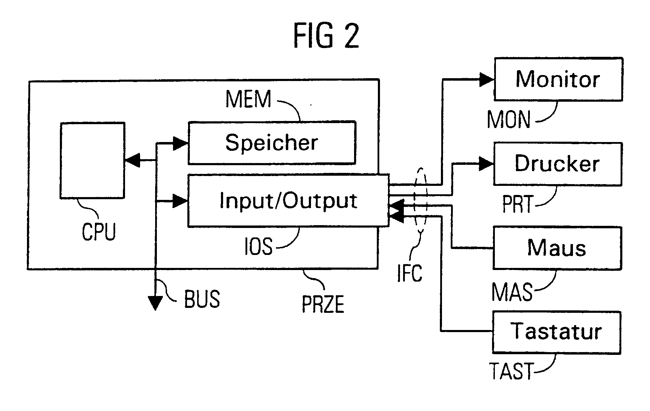

In **Fig.2** ist eine Prozessoreinheit PRZE dargestellt. Die Prozessoreinheit PRZE umfaßt einen Prozessor CPU, einen Speicher SPE und eine Input/Output-Schnittstelle IOS, die über ein Interface IFC auf unterschiedliche Art und Weise genutzt wird: Über eine Grafikschnittstelle wird eine Ausgabe auf einem Monitor MON sichtbar und/oder auf einem Drucker PRT ausgegeben. Eine Eingabe erfolgt über eine Maus MAS oder eine Tastatur TAST. Auch verfügt die Prozessoreinheit PRZE über einen Datenbus BUS, der die Verbindung von einem Speicher MEM, dem Prozessor CPU und der Input/Output-Schnittstelle IOS gewährleistet. Weiterhin sind an den Datenbus BUS zusätzliche Komponenten anschließbar, z.B. zusätzlicher Speicher, Datenspeicher (Festplatte) oder Scanner.

Literaturverzeichnis:
[1] Projektion mit Gestenbedienung und Auswertung im sichtbaren Bereich, US 5,528,263
[2] Produktbeschreibung: Flächenlautsprecher: das schallende Poster - Dekorativ, leicht und effektvoll; Siemens AG, 1999, siehe auch: http://www.atd.siemens.de/it-dl

## Patentansprüche

1. Verfahren zur Interaktion mit einem Benutzer, bei dem bei Vorliegen eines Ereignisses auf einer Interaktionsfläche (BOF, PD) die Interaktionsfläche (BOF, PD) oder ein Teil der Interaktionsfläche (BOF, PD) mittels eines Flachlautsprechers in Schwingung versetzt wird,
**dadurch gekennzeichnet,**
**daß** die Interaktionsfläche (BOF, PD) oder der Teil der Interaktionsfläche (BOF, PD) als der Flachlautsprecher ausgeführt ist.

2. Verfahren nach Anspruch 1,
bei dem das Ereignis mindestens eine Möglichkeit der folgenden umfaßt:
a)Berühren der Interaktionsfläche (BOF, PD);
b)Bewegen einer Interaktionskomponente (H) auf der Interaktionsfläche (BOF, PD);
c)Verweilen der Interaktionskomponente (H) für eine vorgegebene Zeitdauer.

3. Verfahren nach einem der vorhergehenden Ansprüche,
bei dem auf die Interaktionsfläche (BOF, PD) eine graphische Bedienoberfläche (BOF) projiziert wird und die Interaktion erfolgt, indem eine Kamera (K) die Bedienoberfläche (BOF) und die Interaktionskomponente (H) aufnimmt, wobei die Interaktionskomponente (H) die Funktionalität eines Eingabezeigers, insbesondere eines Mauszeigers (MZ), wahrnimmt.

4. Verfahren nach Anspruch 3,
bei dem der Eingabezeiger eine vorgegebene Aktion auslöst, wenn für eine vorgegebene Zeitdauer an einer Stelle der Interaktionsfläche (BOF, PD) verweilt wird.

5. Verfahren nach einem der vorhergehenden Ansprüche,
bei dem die Interaktionsfläche (BOF, PD) mit Infrarotlicht beleuchtet wird.

6. Verfahren nach Anspruch 5,
bei dem zur Aufnahme der Interaktionsfläche (BOF, PD) eine Kamera (K) vorgesehen ist, die für den Frequenzbereich des Infrarotlichts empfindlich ist.

7. Verfahren nach einem der vorhergehenden Ansprüche,
bei dem die Interaktionskomponente (H) die Hand oder ein Finger des Benutzers ist.

8. Anordnung zur Interaktion mit einem Benutzer, bei der eine Prozessoreinheit vorgesehen ist, die derart eingerichtet ist, daß bei Vorliegen eines Ereignisses auf einer Interaktionsfläche (BOF, PD) die Interaktionsfläche (BOF, PD) oder ein Teil der Interaktionsfläche (BOF, PD) mittels eines Flachlautsprechers in Schwingung versetzbar ist,
**dadurch gekennzeichnet,**
**daß** die Interaktionsfläche (BOF, PD) oder der Teil der Interaktionsfläche (BOF, PD) als der Flachlautsprecher ausgeführt ist.

## Claims

1. Method for interacting with a user,
in which, when there is an event on an interaction area (BOF, PD), the interaction area (BOF, PD) or part of the interaction area (BOF, PD) is made to oscillate by means of a flat loudspeaker,
**characterized**
**in that** the interaction area (BOF, PD) or the part of the interaction area (BOF, POD) is in the form of the flat loudspeaker.

2. Method according to Claim 1,
in which the event covers at least one of the following possibilities:
a) the interaction area (BOF, PD) is touched;
b) an interaction component (H) moves on the interaction area (BOF, PD);
c) the interaction component (H) does not move for a prescribed period of time.

3. Method according to one of the preceding claims,
in which a graphical user interface (BOF) is projected onto the interaction area (BOF, PD), and the interaction occurs by virtue of a camera (K) recording the user interface (BOF) and the interaction component (H), with the interaction component (H) performing the functions of an input pointer, particularly of a mouse pointer (MZ).

4. Method according to Claim 3,
in which the input pointer triggers a prescribed action if one spot on the interaction area (BOF,PD) is dwelt upon for a prescribed period of time.

5. Method according to one of the preceding claims,
in which the interaction area (BOF, POD) is illuminated with infrared light.

6. Method according to Claim 5,
in which the interaction area (BOF, PD) is recorded by providing a camera (K) which is sensitive to the frequency range of infrared light.

7. Method according to one of the preceding claims,
in which the interaction component (H) is a hand or a finger of the user.

8. Arrangement for interacting with a user, in which a processor unit is provided which is set up such that, when there is an event on an interaction area (BOF, PD), the interaction area (BOF, PD) or part of the interaction area (BOF, PD) can be made to oscillate by means of a flat loudspeaker,
**characterized**
**in that** the interaction area (BOF, PD) or the part of the interaction area (BOF, PD) is in the form of the flat loudspeaker.

## Revendications

1. Procédé destiné à une interaction avec un utilisateur
dans lequel, lorsqu'un événement se produit sur une surface d'interaction (BOF, PD), la surface d'interaction (BOF, PD) ou une partie de la surface d'interaction (BOF, PD) est mise en vibration par un haut-parleur plan,
**caractérisé par le fait**
**que** la surface d'interaction (BOF, PD) ou la partie de la surface d'interaction (BOF, PD) est conçue comme haut-parleur plan.

2. Procédé selon la revendication 1
dans lequel l'événement comporte au moins une des possibilités suivantes:
(a) toucher de la surface d'interaction (BOF, PD);
(b) déplacement d'une composante interactive (H) sur la surface d'interaction (BOF, PD);
(c) arrêt de la composante interactive (H) pendant une période de temps prédéterminée.

3. Procédé selon l'une des revendications précédentes
dans lequel une interface graphique de commande (BOF) est projetée sur la surface d'interaction (BOF, PD) et l'interaction se produit par le fait qu'une caméra (K) fait une prise de vue de la surface d'interaction (BOF) et de la composante interactive (H), la composante interactive (H) se chargeant de la fonctionnalité d'un pointeur de saisie, notamment d'un pointeur de souris (MZ).

4. Procédé selon la revendication 3
dans lequel le pointeur de saisie déclenche une action prédéterminée lorsqu'un arrêt se produit pendant un temps prédéterminé à un endroit de la surface d'interaction (BOF, PD).

5. Procédé selon l'une des revendications précédentes
dans lequel la surface d'interaction (BOF, PD) est illuminée avec de la lumière infrarouge.

6. Procédé selon la revendication 5
dans lequel est prévue, pour la prise de vue de la surface d'interaction (BOF, PD), une caméra (K) qui est sensible dans la gamme de fréquence de la lumière infrarouge.

7. Procédé selon l'une des revendications précédentes
dans lequel la composante interactive (H) est la main ou un doigt de l'utilisateur.

8. Dispositif destiné à une interaction avec un utilisateur dans lequel est prévue une unité de processeur conçue de telle sorte que, en présence d'un événement sur une surface d'interaction (BOF, PD), la surface d'interaction (BOF, PD) ou une partie de la surface d'interaction (BOF, PD) peut être mise en vibration au moyen d'un haut-parleur plan
**caractérisé par le fait**
**que** la surface d'interaction (BOF, PD) ou la partie de la surface d'interaction (BOF, PD) est conçue comme étant le haut-parleur plan.
